# EUROPÄISCHE PATENTSCHRIFT

(11) **EP 1 092 521 B1**
(45) Veröffentlichungstag und Bekanntmachung des Hinweises auf die Patenterteilung: **20.08.2003**
(21) Anmeldenummer: 00890235.5
(22) Anmeldetag: 28.07.2000
(51) Int. Cl.: B29C 33/44, B29C 45/40, B29C 45/44, B29C 33/38

(54) **Formwerkzeug für Spritz- oder Druckgussmaschinen**
Mould for injection or pressure moulding machine
Moule pour machine de moulage par injection ou pression

(30) Priorität: 20.08.1999 AT 143699
(43) Veröffentlichungstag der Anmeldung: 18.04.2001
(73) Patentinhaber: Wimmer, Erwin, A-4300 St. Valentin (AT)
(72) Erfinder: Wimmer, Erwin, A-4300 St. Valentin (AT)
(74) Vertreter: Hübscher, Gerhard, Dipl.-Ing.

(56) Entgegenhaltungen:
- DE-A- 2 619 065
- JP-A- 6 262 629
- JP-A- 2000 033 636
- US-A- 4 539 168
- US-A- 5 730 812
- PATENT ABSTRACTS OF JAPAN vol. 1997, no. 11, 28. November 1997 (1997-11-28) & JP 09 193205 A (RICOH CO LTD), 29. Juli 1997 (1997-07-29)
- PATENT ABSTRACTS OF JAPAN vol. 1996, no. 12, 26. Dezember 1996 (1996-12-26) & JP 08 206808 A (HONDA MOTOR CO LTD), 13. August 1996 (1996-08-13)
- PATENT ABSTRACTS OF JAPAN vol. 1997, no. 08, 29. August 1997 (1997-08-29) & JP 09 109192 A (SEKISUI CHEM CO LTD), 28. April 1997 (1997-04-28)

## Beschreibung

Die Erfindung bezieht sich auf ein Formwerkzeug für Spritz- oder Druckgußmaschinen mit zwei schließbaren Werkzeugteilen, die zwischen sich, gegebenenfalls unter Einsatz von Kernen und/oder Schiebern, einen Formhohlraum bilden und von denen der eine Werkzeugteil zumindest einen Auswerfer aufnimmt, wobei Auswerfer, Kern und Schieber als bewegliche Einsätze schiebeverstellbar in Geradführungen der Werkzeugteile sitzen.

Um beim Spritz- oder Druckguß auch Werkstücke mit Hohlräumen oder Hinterschneidungen fertigen und auch wieder entformen zu können, sind Kerne, Schieber und auch Auswerfer erforderlich, die in den Werkzeugteilen relativverschiebbar eingesetzt werden müssen. Dazu gibt es bisher Geradführungen mit zur Führungsrichtung parallele Gleitflächen in den Werkzeugteilen und ebenfalls zur Führungsrichtung parallele Führungsflächen der Einsätze, wobei Geradführungen und Führungsflächen meist mit einer Spielpassung (H7/g6) gefertigt werden. Auf Grund der toleranzbehafteten Herstellung ergibt sich dadurch tatsächlich ein zwischen dem entsprechenden Höchst- und Mindestspiel liegendes Führungsspiel, das die Verschiebbarkeit der Teile ermöglicht, den Aufbau eines ausreichenden Schmierfilmes während des Werkzeugeinsatzes zu gewährleisten hat und das Eindringen der heißen, dünnflüssigen Schmelze beim Spritzvorgang verhindern soll. In der Praxis sind diese Parallelflächen-Gleitsysteme einem beträchtlichen Verschleiß ausgesetzt, der die Funktionssicherheit der Führungen gefährdet, zu einer Qualitätsminderung der Werkstücke durch Gratbildung führt, regelmäßige Wartungs- und Schmierzyklen erfordert und einen häufigen Austausch der präzisen und teuren Führungsteile oder den Austausch des gesamten Werkzeuges nach verhältnismäßig kurzer Standzeit zur Folge hat. Vor allem bei einem schmierstofffreien Einsatz der Führungssysteme, wie er häufig in der medizinischen Technik, in der Elektronikindustrie oder auch in der Autoindustrie verlangt wird, kommt es zu einem erhöhten Verschleiß, wodurch es zu unerwünschten Produktionsausfällen und aufwendigen Reparaturen im Werkzeugbereich kommen kann.

Zur Ausbildung eines Spreizkernes für ein Formwerkzeug einer Spritz- oder Druckgußmaschine ist es schließlich bekannt (DE 26 19 065 A1), Kernsegmente über ein Keilgetriebe verstellbar auf einem Dorn zu lagern. Die Kernsegmente werden über gerade Schwalbenschwanzführungen auf dem Dom verschiebbar geführt, wobei diese Geradführungen zueinander konisch verlaufen. Da für eine genaue Führung der Kernsegmente enge Führungstoleranzen erforderlich sind, ist wiederum mit einer entsprechenden Verschleißbelastung der Schwalbenschwanzführungen bzw. der Kernsegmente zu rechnen.

Der Erfindung liegt daher die Aufgabe zugrunde, ein Formwerkzeug der eingangs geschilderten Art zu schaffen, das sich durch seine besonders verschleißarmen und dennoch störungsfreien Führungseinrichtungen auszeichnet und sich auch bestens zum Einsatz ohne Schmierstoffe eignet.

Die Erfindung löst diese Aufgabe dadurch, daß die in den Formenhohlraum mündenden Geradführungen jeweils eine im Schließsinne sich verengende Konizität, vorzugsweise mit einem Konuswinkel von maximal 1°, aufweisen und die den Geradführungen zugeordneten Führungsflächen der Einsätze in einer an diese Konizität angepaßten Schräge zur Führungsrichtung verlaufen. Durch diese schwache Konizität wird die Geradführung an sich nicht beeinträchtigt, doch kommt es einerseits in der Schließstellung zu minimalsten Führungsspalten, die sich anderseits schnell wieder vergrößern, sobald die Schließstellung verlassen wird. Die Öffnungsbewegung und die Schließbewegung erfolgen daher bei vergleichsweise großem Führungsspalt, im Regelfall bis 0,3 mm stark, der eine berührungsarme und belastungsschwache Relativbewegung zwischen Führung und Führungsfläche mit sich bringt und damit Verschleißerscheinungen weitgehend unterbindet. Dadurch lassen sich selbstverständlich auch die Abnützungen im Führungsbereich der Einsätze minimieren und es wird eine kontrollierbare Abdichtung gegenüber dem Formhohlraum über die ganze Standzeit der Werkzeuge gewährleistet. Die erhöhte Spaltstärke während der Schließ- und Öffnungsbewegungen erlaubt es außerdem, problemloser auf Schmierstoffe zu verzichten und auch die Anforderungen an die Oberflächenrauhigkeit und Oberflächenhärte der Führungsteile zu mindern, was den überaus aufwendigen Arbeitsablauf bei der Herstellung der Führungsteile zu vereinfachen hilft.

Besonders vorteilhaft ist es, wenn in Schließstellung zwischen den Geradführungen und den Führungsflächen ein durch einen mechanischen Anschlag vorbestimmter Restspalt, vorzugsweise im Stärkenbereich von 0,005 - 0,020 mm, verbleibt. Durch diesen Restspalt können dehnungsbedingte Verklemmungen oder durch die Schließkräfte hervorgerufene Verkeilungen der Einsätze in den Geradführungen vermieden werden, ohne daß der Restspalt merkbare Undichtheiten zum Formenhohlraum hin öffnet und die Qualität der Werkstücke durch Gratbildungen beeinträchtigen könnte. Trotz dieser minimalen Restspalte bleibt aber durch die Konizität der Führungen und den sich sofort mit einer Öffnungsbewegung vergrößernden Führungsspalt die Beweglichkeit der Einsätze leichtgängig und überaus verschleißarm.

Um auch bei kleindimensionierten Kernen die sehr hohen Schließkräfte ohne Beschädigungsgefahr aufnehmen zu können, ist einer in den Formenhohlraum mündenden Geradführung als Primärführung eine zusätzliche, vom Formenhohlraum getrennte Geradführung als Sekundärführung zugeordnet, wobei die Primärführung gegenüber der Sekundärführung einen größeren Konuswinkel aufweist. Diese größere und stabilere Sekundärführung kann auch den entsprechend hohen Belastungen der Schließeinheit der Spritz- oder Druckgußmaschine standhalten und schützt die feinere Primärführung vor einer Überbelastung. Der Konuswinkel der Primärführung ist dabei mindestens um 0,01° größer als der Konuswinkel der Sekundärführung, um zu gewährleisten, daß auf den in den Formenhohlraum vorragenden Kern in keiner der möglichen Verschiebestellungen beschädigungs- oder verschleißgefährliche Kräfte übertragen werden, da in geschlossener Stellung der Restspalt in der Primärführung dem Restspalt der Sekundärführung höchstens gleicht, beim Öffnen oder Verschieben jedoch der Führungsspalt der Primärführung immer größer ist als der Führungsspalt in der Sekundärführung.

Um die Herstellung des Formwerkzeuges, insbesondere zur Einhaltung des Restspaltes, zu vereinfachen, werden zuerst die Geradführungen der Werkzeugteile und die Führungsflächen der Einsätze hinsichtlich ihrer Konizität fertigbearbeitet und die Einsätze spaltfrei in die Geradführungen eingeschoben, worauf die mit ausreichender Überlänge vorgefertigten Führungsflächen der Einsätze entsprechend der durch Berechnung ermittelten Längsverschiebung zur Freigabe des Restspaltes abgelängt und an den mechanischen Anschlägen zur Sicherung der die Restspalte bestimmenden Längslage angesetzt werden. Die Herstellung und Einhaltung des Restspaltes wird daher nicht in aufwendiger Weise über den Durchmesser der Führungen bzw. Führungsflächen vorgenommen, sondern über eine axiale Verschiebung der Einsätze relativ zu den Geradführungen entsprechend einer genau berechenbaren axialen Strecke, was zu einer genaueren und kostengünstigeren Restspaltbestimmung und Fixierung führt. Durch diese berechnete Axialverschiebung zur Bestimmung des Restspaltes bleiben auch verhältnismäßig große Längentoleranzen bei den kleinen Konuswinkeln ohne größere Bedeutung, da sie nur zur minimalen Spaltveränderungen führen, wobei eine möglichst genaue Spaltbestimmung und Spaltherstellung Voraussetzung für die einwandfreie und störunanfällige Funktion der Führungen ist.

In der Zeichnung ist der Erfindungsgegenstand schematisch veranschaulicht, und zwar zeigen
- Fig. 1: ein erfindungsgemäßes Formwerkzeug in verschiedenen Arbeitsstellungen jeweils im Schnitt,
- Fig. 2: einen Auswerfer dieses Formwerkzeuges im Schnitt größeren Maßstabes, wobei die linke Hälfte das geschlossene, die rechte Hälfte das geöffnete Werkzeug veranschaulicht, die
- Fig. 3, 4, 5 und 6: einen Kern des Formwerkzeuges mit zugehörender Verschiebeeinrichtung in Stirnansicht bzw. in Schnitten nach der Linie IV-IV bzw. VI-VI der Fig. 3 in offener bzw. in geschlossener Werkzeugstellung, die
- Fig. 7 und 8: einen Schieber des erfindungsgemäßen Formwerkzeuges im Schnitt bei geschlossenem bzw. geöffnetem Werkzeug sowie
- Fig. 9: die Herstellung des Restspaltes für einen Auswerfer im Schnitt an Hand mehrerer Verfahrensschritte.

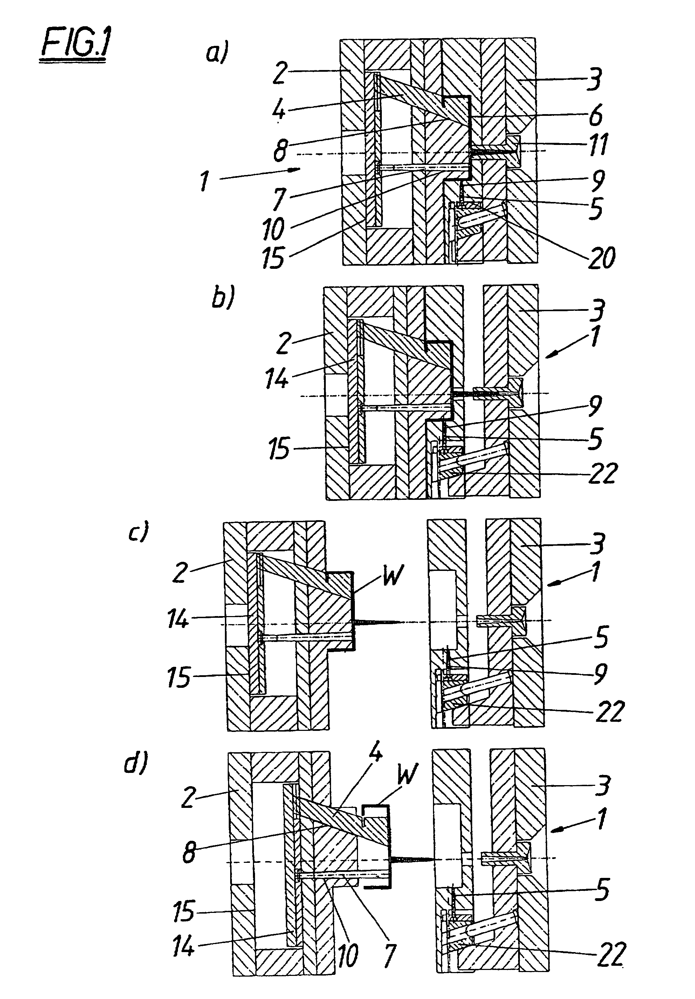

Wie in Fig. 1 angedeutet, umfaßt ein Formwerkzeug 1 für eine Spritz- oder Druckgußmaschine 2 schließ- und öffenbare Werkzeugteile 2, 3, die zwischen sich unter Einsatz beispielsweise eines Schiebers 4 und eines Kernes 5 einen Formhohlraum 6 bilden. Der eine Werkzeugteil 2 nimmt außerdem einen Auswerfer 7 auf und Schieber 4, Kern 5 und Auswerfer 7 sind schiebeverstellbar in Geradführungen 8, 9, 10 der zugehörenden Werkzeugteile 2, 3 eingesetzt. Ist das Formwerkzeug 1 geschlossen (Fig. 1a), kann über einen Spritzansatz 11 Schmelze in den Formhohlraum 6 eingespritzt und das Werkstück W dem Formhohlraum 6 entsprechend ausgeformt werden. Zum Öffnen und Entformen wird dann zuerst der Kern 5 aus dem Formhohlraum 6 zurückgezogen (Fig. 1b), dann die beiden Werkzeugteile 2, 3 geöffnet (Fig. 1c) und schließlich der Schieber aus der Hinterschneidung herausbewegt und das Werkstück W über den Auswerfer 7 ausgeworfen (Fig. 1d).

Um funktionssichere und dennoch verschleißarme Führungen zu erreichen, sind die Geradführungen 8, 9, 10 in den Werkzeugteilen 2, 3 mit einer im Schließsinne sich verengenden Konizität mit einem Winkel von max. 1° gegenüber der Führungsrichtung ausgebildet und auch die Führungsflächen der zugehörenden Einsätze verlaufen entsprechend der Konizität zur Führungsrichtung schräg.

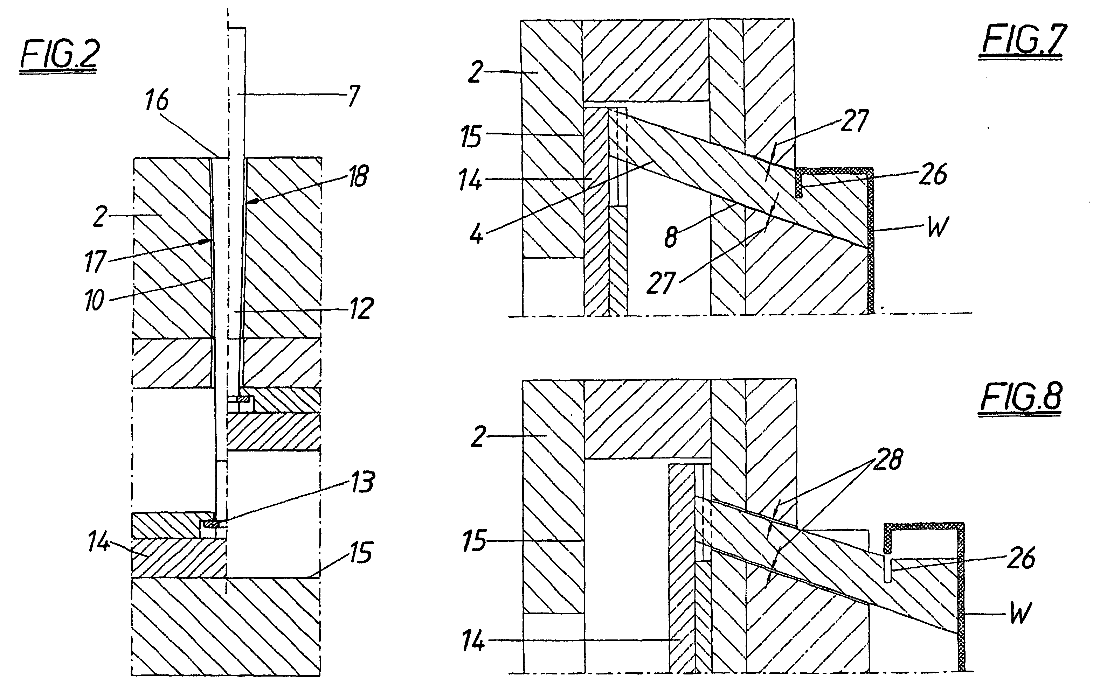

Wie in Fig. 2 angedeutet, ist für den Auswerfer 7 eine kegelige Geradführung 10 im Werkzeugteil 2 vorgesehen, welcher Auswerfer 7 als Führungsflächen eine entsprechend äußere Kegelfläche 12 besitzt. Der Auswerfer 7 greift über eine Sicherungsscheibe 13 an einer Betätigungsplatte 14 zur Schiebeverstellung an, wobei ein mechanischer Anschlag 15 die Schließposition des Auswerfers bestimmt, in der bei geschlossenem Werkzeug der Auswerfer 7 mit seiner Stirnfläche 16 den Formhohlraum 6 begrenzt und sich zwischen Geradführung 10 und Führungsfläche 12 ein minimaler Restspalt 17 ergibt. Durch ein Öffnen der Werkzeuge bzw. ein Verschieben der Betätigungsplatte 14 wird der Auswerfer 7 vom mechanischen Anschlag 15 abgehoben und in den Formhohlraum 6 zum Auswerfen des Werkstückes eingeschoben. Dabei ergibt sich durch die Konizität der Führung bzw. der Führungsflächen ein sich vergrößernder Führungsspalt 18, der eine leichtgängige und besonders verschleißarme Führung des Auswerfers 7 gewährleistet.

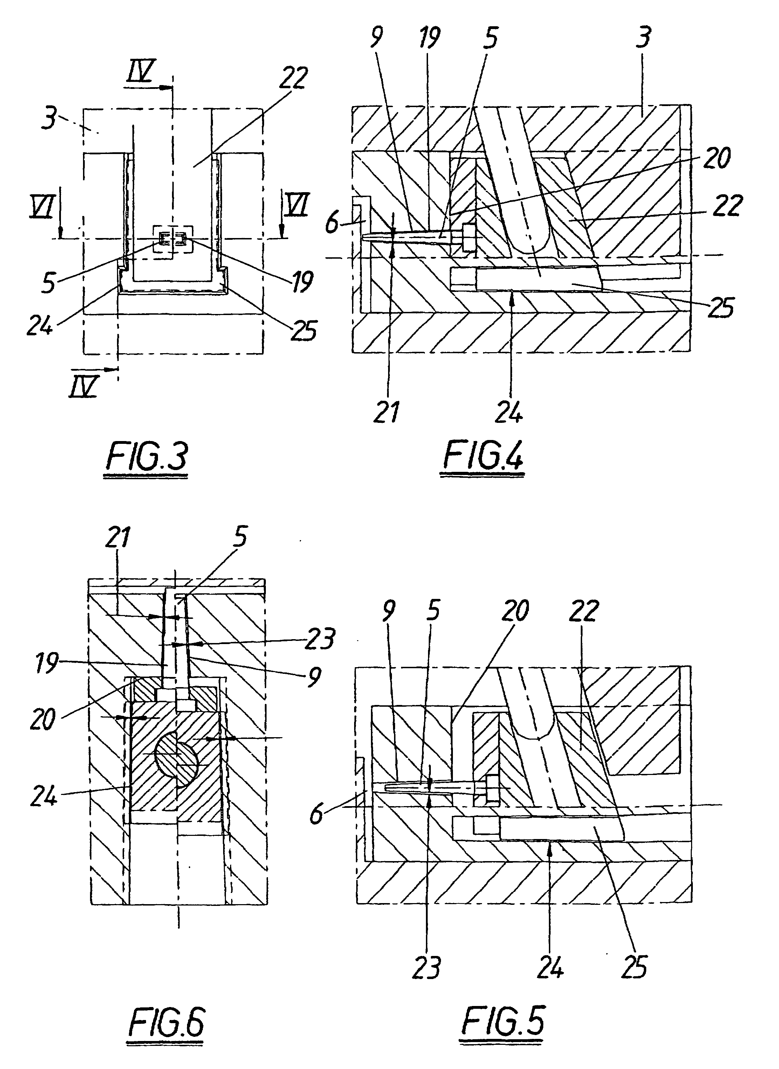

Wie in den Fig. 3 bis 6 veranschaulicht, ist auch für den Kern 5 eine konische Führung 9 vorgesehen, die wegen des rechteckigen Querschnittes des Kernes mit einer Pyramidenmantelfläche 19 als Führungsfläche des Kerns 5 zusammenwirkt. Auch hier wird über einen mechanischen Anschlag 20 die Schließstellung des Kernes 5 bei geschlossenen Werkzeugen vorgegeben, in der ein minimaler Restspalt 21 verbleibt. Wird der Kern 5 beim Öffnen des Formenwerkzeuges durch eine geeignete Betätigungseinrichtung 22 zurückgezogen, vergrößert sich sofort der Restspalt zu einem eine leichtgängige und verschleißarme Gleitbewegung mit sich bringenden Führungsspalt 23.

Um die erheblichen Belastungen durch die Schließeinheit des Formenwerkzeuges sicher aufnehmen und den Kern 5 nicht diesen hohen Belastungen aussetzen zu müssen, ist der Geradführung 9 als Primärführung eine vom Formenhohlraum 6 getrennte Sekundärführung 24 zugeordnet, entlang der die Betätigungseinheit 22 mit geeigneten Führungsschienen 25 verschiebbar geführt ist. Auch diese Sekundärführung 24 und die zugehörenden Führungsflächen der Führungsschienen 25 sind mit einer Konizität ausgebildet, wobei allerdings der Konuswinkel der Primärführung 9 größer ist als der der Sekundärführung 24.

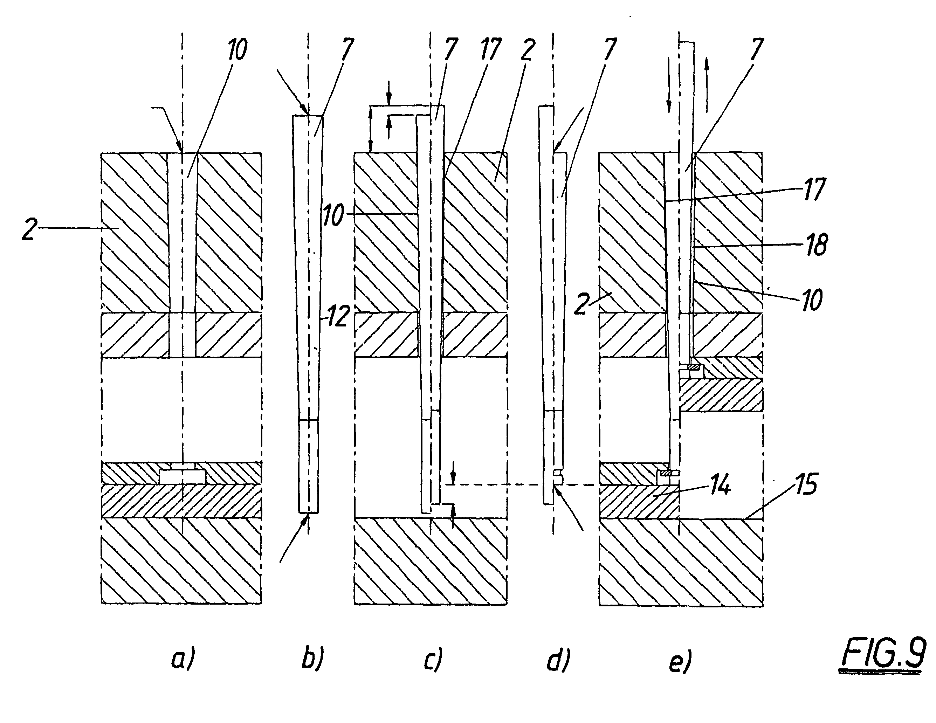

Wie in den Fig. 7 und 8 angedeutet, wird der Schieber 4 entlang einer Geradführung 8 des Werkzeugteiles 2 über die Betätigungsplatte 14 schiebeverstellt, um den Hinterschneidungsbereich 26 des Formhohlraumes 6 bzw. des Werkstückes W formen und dann auch wieder entformen zu können. Für den Schieber 4 ist eine Geradführung 8 mit einer geringfügigen Konizität vorgesehen, die in Schließstellung (Fig. 7) einen minimalen Restspalt 27 und beim Öffnen des Werkzeuges bzw. beim Schiebeverstellen des Schiebers in Offenstellung einen vergrößerten Führungsspalt 28 mit sich bringt. Auch hier ergibt der mechanische Anschlag 15 für die Betätigungsplatte 14 die genaue Schließstellung des Schiebers 4 und bestimmt damit den Restspalt 27.

Wie in Fig. 9 für die Geradführung 10 des Auswerfers 7 schematisch veranschaulicht, wird bei der Herstellung der Geradführung zur Bestimmung und Einstellung des Restspaltes zuerst die Geradführung 10 im zugehörenden Werkzeugteil 2 maßgerecht gebohrt (Fig. 9a) und der Auswerfer 7 bei geeigneter Überlänge mit der der Konizität der Geradführung 10 entsprechenden Kegelfläche 12 vorgefertigt (Fig. 9b). Dann wird der Auswerfer 7 in die Geradführung 10 eingeschoben, bis er spielfrei in der Geradführung 10 sitzt, und die erforderliche Längsverschiebung rechnerisch ermittelt, die für die Freigabe des gewünschten Restspaltes 17 erforderlich wäre (Fig. 9c). Auf Grund dieser Berechnung wird dann der Auswerfer 7 an beiden Stirnseiten auf das berechnete Maß abgelängt und der Einstich für den Sicherungsring od. dgl. eingearbeitet (Fig. 9d), worauf nun der Auswerfer 7 ordnungsgemäß in die Führung bzw. Betätigungsplatte 14 unter Berücksichtigung der Lage des mechanischen Anschlages 15 eingebaut und einer entsprechenden Funktionsprobe unterworfen wird (Fig. 9e). Der Auswerfer 7 ist einsatzbereit und bietet bei geschlossenem Werkzeug den vorberechneten Restspalt 17, von dem aus sich beim Öffnen bzw. Vorschieben des Auswerfers auf Grund der geometrischen Verhältnisse der vergrößerte Führungsspalt 18 ergibt.

## Patentansprüche

1. Formwerkzeug (1) für Spritz- oder Druckgußmaschinen mit zwei schließbaren Werkzeugteilen (2, 3), die zwischen sich, gegebenenfalls unter Einsatz von Kernen (5) und/oder Schiebern (4), einen Formhohlraum (6) bilden und von denen der eine Werkzeugteil (2) zumindest einen Auswerfer (7) aufnimmt, wobei Auswerfer (7), Kern (5) und Schieber (4) als bewegliche Einsätze schiebeverstellbar in Geradführungen (8, 9, 10) der Werkzeugteile (2, 3) sitzen, **dadurch gekennzeichnet, daß** die in den Formenhohlraum (6) mündenden Geradführungen (8, 9, 10) jeweils eine im Schließsinne sich verengende Konizität, vorzugsweise mit einem Konuswinkel von maximal 1°, aufweisen und die den Geradführungen (8, 9, 10) zugeordneten Führungsflächen (12, 19) der Einsätze in einer an diese Konizität angepaßten Schräge zur Führungsrichtung verlaufen.

2. Formwerkzeug nach Anspruch 1, **dadurch gekennzeichnet, daß** in Schließstellung zwischen den Geradführungen (8, 9, 10) und den Führungsflächen (12, 19) ein durch einen mechanischen Anschlag (15, 20) vorbestimmter Restspalt (17, 21, 27), vorzugsweise im Stärkenbereich von 0,005 - 0,020 mm, verbleibt.

3. Formwerkzeug nach Anspruch 1 oder 2, **dadurch gekennzeichnet, daß** einer in den Formenhohlraum (6) mündenden Geradführung (9) als Primärführung eine zusätzliche, vom Formenhohlraum getrennte Geradführung als Sekundärführung (24) zugeordnet ist, wobei die Primärführung (9) gegenüber der Sekundärführung (24) einen größeren Konuswinkel aufweist.

4. Verfahren zum Herstellen eines Formwerkzeuges nach einem der Ansprüche 1 bis 3, wobei zuerst die Geradführungen der Werkzeugteile und die Führungsflächen der Einsätze hinsichtlich ihrer Konizität fertigbearbeitet und die Einsätze spaltfrei in die Geradführungen eingeschoben werden, worauf die mit ausreichender Überlänge vorgefertigten Führungsflächen der Einsätze entsprechend der durch Berechnung ermittelten Längsverschiebung zur Freigabe des Restspaltes abgelängt und gegenüber den mechanischen Anschlägen zur Sicherung der Restspalte in dieser Längslage festgelegt werden.

## Claims

1. A moulding tool (1) for injection moulding or pressure diecasting machines with two closable tool parts (2, 3) which form a mould cavity (6) between them, with the insertion of cores (5) and/or slides (4) if required, and of which one part (2) accommodates at least one ejector (7), the ejector (7), core (5) and slide (4) being disposed as movable inserts slidably adjustable in rectilinear guides (8, 9, 10) of the tool parts (2, 3), **characterised in that** the rectilinear guides (8, 9, 10) leading into the mould cavity (6) each have a conicity which tapers in the closing direction, preferably with a cone angle of 1° maximum, and the guide surfaces (12, 19) of the inserts associated with the rectilinear guides (8, 9, 10) extend at an angle to the direction of guidance, said angle being adapted to said conicity.

2. A moulding tool according to claim 1, **characterised in that** a residual gap (17, 21, 27) predetermined by a mechanical stop (15, 20), preferably in the thickness range from 0.005 to 0.020 mm, is left in the closed position between the rectilinear guides (8, 9, 10) and the guide surfaces (12, 19).

3. A moulding tool according to claim 1 or 2, **characterised in that** an additional rectilinear guide separated from the mould cavity is allocated as a secondary guide (24) to a rectilinear guide (9) as the primary guide leading into the mould cavity (6), the primary guide (9) having a larger cone angle than the secondary guide (24).

4. A method of making a moulding tool according to any one of claims 1 to 3, wherein the rectilinear guides of the tool parts and the guide surfaces of the inserts are first finish-machined in respect of their conicity and the inserts are inserted into the rectilinear guides so as to be free of any gaps, whereupon the guide surfaces of the inserts prefabricated with sufficient over-length are cut to length to correspond to the longitudinal displacement determined by calculation in order to free the residual gap, and are fixed in this longitudinal position relative to the mechanical stops in order to secure the residual gaps.

## Revendications

1. Outil de moulage (1) pour des machines à mouler par injection ou sous pression, avec deux parties d'outils (2, 3) refermables, formant entre elles, le cas échéant avec utilisation de noyaux (5) et/ou de poussoir (4), un espace creux de moulage (6) et dont une partie d'outil (2) reçoit au moins un éjecteur (7), l'éjecteur (7), le noyau (5) et le poussoir (4) étant monté, à titre d'inserts mobiles de façon manoeuvrable par coulissements, dans des guidages rectilignes (8, 9, 10) des parties d'outils (2, 3), **caractérisé en ce que** les guidages rectilignes (8, 9, 10) débouchant dans l'espace creux de moulage (6) présentent chacun une conicité allant en rétrécissant dans le sens de la fermeture, de préférence avec un angle de cône maximal de 1° et les faces de guidage (12, 19) associées aux guidages rectilignes (8, 9, 10) des inserts s'étendant en une pente, adaptée à cette conicité, par rapport à la direction de guidage.

2. Outil de moulage selon la revendication 1, **caractérisé en ce qu'**à la position de fermeture, il reste entre les guidages rectilignes (8, 9, 10) et les faces de guidage (12, 19) un interstice résiduel (17, 21, 27), prédéterminé par une butée mécanique (15, 20), interstice dont la valeur est de préférence située dans la plage de 0,005 à 0,020 mm.

3. Outil de moulage selon la revendication 1 ou 2, **caractérisé en ce qu'**est associé à un guidage rectiligne (9) débouchant dans l'espace creux de moulage (6), à titre de guidage primaire, un guidage rectiligne supplémentaire séparé de l'espace creux de moulage, à titre de guidage secondaire (24), le guidage primaire (9) présentant un angle de conicité plus grand que celui que présente le guidage secondaire (24).

4. Procédé de fabrication d'un outil de moulage selon l'une des revendications 1 à 3, **caractérisé en ce que** d'abord les guidages rectilignes des parties d'outil et les phases de guidage des inserts sont l'objet d'un usinage de finition du point de vue de leur conicité et les inserts sont insérés, sans aucun interstice dans les guidages rectilignes, suite à quoi les faces de guidage, préfabriquées avec des surlongueurs suffisantes, des inserts sont coupées en longueur de manière correspondante au déplacement longitudinal, déterminé par calcul, devant produire la libération de l'espace résiduel et, le cas échéant, de manière correspondante aux butées mécaniques devant assurer les interstices résiduels dans cette position en longueur.
